# EUROPEAN PATENT APPLICATION

(11) **EP 2 886 186 A1**
(43) Date of publication of application: **24.06.2015**
(21) Application number: 14186047.8
(22) Date of filing: 23.09.2014
(51) Int. Cl.: B01D 67/00, B01D 69/02, B01D 69/06, B01D 69/10, B01D 71/68

(54) **Skinless polyethersulfone membrane**

(30) Priority: 17.12.2013 US 201314109191
(71) Applicant: Pall Corporation, Port Washington, NY 11050 (US)
(72) Inventor: Han, Binbing, Pensacola, FL Florida 32514 (US)
(74) Representative: Hoeger, Stellrecht & Partner Patentanwälte

(57) **Abstract**

A skinless microporous asymmetric polyethersulfone membrane comprising a surface having a surface area comprising nodes and tendrils, the tendrils having at least two ends, one end which is attached to a node, and another end which is unattached to the node, the tendrils covering in the range of from about 10% to about 70% of the surface area of the first surface, is disclosed.

## Description

### BACKGROUND OF THE INVENTION

Polymeric membranes are used to filter a variety of fluids. However, there is a need for membranes that provide high throughput performance.

The present invention provides for ameliorating at least some of the disadvantages of the prior art. These and other advantages of the present invention will be apparent from the description as set forth below.

### BRIEF SUMMARY OF THE INVENTION

An embodiment of the invention provides a microporous asymmetric polyethersulfone membrane comprising (a) a first microporous surface; (b) a second microporous surface; and, (c) a bulk between the first and second microporous surface; wherein the first surface has a surface area and comprises nodes and tendrils, the tendrils having at least two ends, one end which is attached to a node, and another end which is unattached to the node, the tendrils covering in the range of from about 10% to about 70% of the surface area of the first surface.

In another embodiment, a skinless microporous asymmetric polyethersulfone membrane is provided, the membrane comprising (a) a first microporous surface; (b) a second microporous surface; and, (c) a bulk between the first and second microporous surface; wherein the first surface has a surface area and comprises nodes and tendrils, the tendrils having at least two ends, one end which is attached to a node, and another end which is unattached to the node, the tendrils covering in the range of from about 10% to about 70% of the surface area of the first surface, and wherein the bulk has an asymmetric pore structure.

In a preferred embodiment, the second microporous surface has a bacterial retentive pore structure.

A method of making a skinless microporous asymmetric polyethersulfone membrane having tendrils on one surface of the membrane is also provided by another embodiment of the invention, the method comprising (a) obtaining a microporous polyether sulfone membrane having a skin; (b) applying an adhesive surface to the skin, wherein the adhesive is attached to an article or a device; (c) pulling the adhesive surface from the membrane, or pulling the membrane from the adhesive surface; and obtaining a skinless membrane having a newly created membrane surface having a surface area, the membrane surface having nodes and tendrils, the tendrils having at least two ends, one end which is attached to a node, and another end which is unattached to the node, the tendrils covering in the range of from about 10% to about 70% of the surface area of the newly created membrane surface.

Methods of filtration comprising passing a fluid through embodiments of the membrane are also provided.

### BRIEF DESCRIPTION OF THE SEVERAL VIEWS OF THE DRAWING(S)

Figure 1 is a scanning electron micrograph (SEM) showing the top surface of a skin removed ("skinless") polyethersulfone (PES) membrane according to an embodiment of the present invention, as described in Example 1, highlighting the tendrils.
Figure 2 is an SEM showing the surface of the skin removed membrane as described in Example 1, also showing the total number of porous structures with tendrils and the total porous structures on the surface area, as used to calculate the percent surface area covered by tendrils.
Figure 3 shows SEMs of the cross-section of a skinless PES membrane according to an embodiment of the present invention (Fig. 3A) and of the membrane before modification (e.g., peeling) (Fig. 3B), as described in Example 2.
Figure 4 shows SEMs of the surface of the skinless membrane (Fig. 4A, also showing tendrils) and of the membrane before modification (Fig. 4B), as described in Example 2.
Figure 5 is an enlarged SEM surface view of the top surface of the skinless membrane prepared as described in Example 2, highlighting the tendrils.
Figure 6 shows the improved liquid wicking in a skinless membrane according to an embodiment of the invention compared to a control membrane.

### DETAILED DESCRIPTION OF THE INVENTION

In accordance with an embodiment of the present invention, a microporous polyethersulfone membrane is provided comprising (a) a first microporous surface; (b) a second microporous surface; and, (c) a porous bulk between the first and second microporous surface; wherein the first surface has a surface area and comprises nodes and tendrils, the tendrils having at least two ends, one end which is attached to a node, and another end which is unattached to the node, the tendrils covering in the range of from about 10% to about 70% of the surface area of the first surface.

In another embodiment, a skinless microporous asymmetric polyethersulfone membrane is provided, the membrane comprising (a) a first microporous surface; (b) a second microporous surface; and, (c) a microporous bulk between the first and second microporous surface; wherein the first surface has a surface area and comprises nodes and tendrils, the tendrils having at least two ends, one end which is attached to a node, and another end which is unattached to the node, the tendrils covering in the range of from about 10% to about 70% of the surface area of the first surface, and wherein the bulk has an asymmetric pore structure.

In some embodiments, the tendrils cover in the range of from about 25% to about 60% of the surface area of the first surface, or in the range from about 35% to about 60% of the surface area of the first surface.

In a preferred embodiment, the second microporous surface has a bacterial retentive pore structure.

A method of making a skinless microporous asymmetric polyethersulfone membrane having tendrils on one surface of the membrane is also provided by another embodiment of the invention, the method comprising (a) obtaining a microporous polyether sulfone membrane having a skin; (b) applying an adhesive surface to the skin, wherein the adhesive is attached to an article or a device; (c) pulling the adhesive surface from the membrane, or pulling the membrane from the adhesive surface; and obtaining a skinless membrane having a newly created membrane surface having a surface area, the membrane surface having nodes and tendrils, the tendrils having at least two ends, one end which is attached to a node, and another end which is unattached to the node, the tendrils covering in the range of from about 10% to about 70% of the surface area of the newly created membrane surface.

Methods of filtration comprising passing a fluid through embodiments of the membrane are also provided. In one embodiment, the method comprises sterile filtration.

Advantageously, "skinless" membranes, particularly skinless asymmetric membranes, can be produced having increased throughput and delayed fouling as compared to skinned membranes. In accordance with embodiments of the invention, the skin layer of asymmetric PES membranes can be removed (e.g., by applying an adhesive surface of an article or device to the open side of the membrane, and pulling the adhesive surface from the membrane, or pulling the membrane from the adhesive surface), providing a skinless membrane having tendrils on the newly created surface. Typically, the surface porosity of the skinless membrane and/or the roughness of the surface is increased compared to the skinned membrane, allowing more open pores to be available for the feed solution to pass through, and increasing liquid wicking. However, since the retentive side of the membrane is not modified, the retention capability of the membrane is not changed.

Membranes according to embodiments of the invention can be used in a variety of applications, including, for example, diagnostic applications (including, for example, sample preparation and/or diagnostic lateral flow devices), ink jet applications, filtering fluids for the pharmaceutical industry, filtering fluids for medical applications (including for home and/or for patient use, e.g., intravenous applications, also including, for example, filtering biological fluids such as blood (e.g., to remove leukocytes)), filtering fluids for the electronics industry, filtering fluids for the food and beverage industry, clarification, filtering antibody- and/or protein-containing fluids, cell detection (including *in situ*), cell harvesting, and/or filtering cell culture fluids. Alternatively, or additionally, membranes according to embodiments of the invention can be used to filter air and/or gas and/or can be used for venting applications (e.g., allowing air and/or gas, but not liquid, to pass therethrough). Membranes according to embodiments of the inventions can be used in a variety of devices, including surgical devices and products, such as, for example, ophthalmic surgical products.

A variety of skinned asymmetric polyethersulfone membranes, including commercially available membranes, can be used in preparing membranes according to embodiments of the invention. Preferably, the surface of the skin has not been treated with a coating to modify the characteristics of the surface, e.g., to modify the hydrophobicity or hydrophilicity of the surface before contacting the surface with an adhesive. Suitable membranes are disclosed in, for example, U.S. Patent Application Publication Number 2013/0193075, and are available under the tradename SUPOR, e.g., SUPOR asymmetric PES C-200 membranes and SUPOR asymmetric PES N-200 membranes (Pall Corporation, Port Washington, NY).

The skin layer can be removed by contacting the surface of the skin with an adhesive attached to an article, such as, for example, a tape, or attached to a device, such as, for example, a roller. Once contacted, the skin layer can be removed, e.g., peeled away from the rest of the membrane, by pulling the attached adhesive away from the membrane, or pulling the membrane away from the attached adhesive.

Preferably, the adhesive is applied and removed in the machine direction of the membrane. Typically, the removal speed is in the range of from about 0.01 inch/second to about 10 inches/second. Preferably, the adhesive is pulled parallel to the surface of the membrane at an acute angle, e.g., about 45 degrees or less.

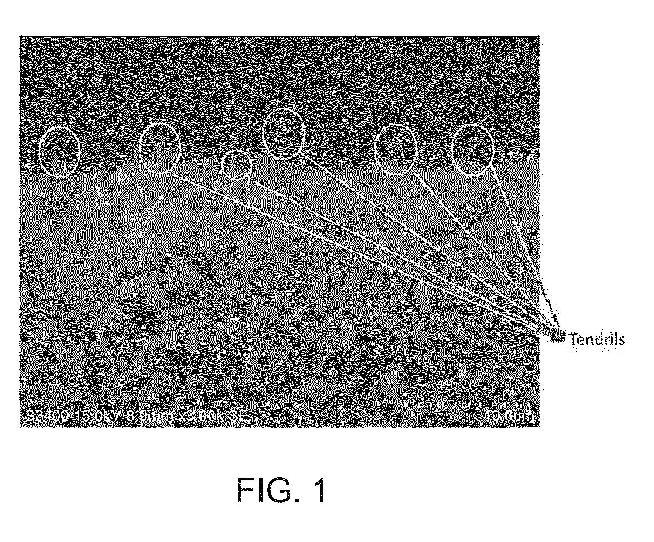

As illustrated in Figures 1, 2, 4A, and 5, tendrils are thin, twisting fibers, having a non-uniform structure (e.g., varied, globular, and/or nodular structure) along the length of the fiber. Typically, tendrils are in the range of from about 0.5 to about 2.5 micrometers (µm) in length (in some embodiments, a length of from about 1 µm to about 2 µm), and in the range of from about 0.1 µm to about 0.5 µm in width.

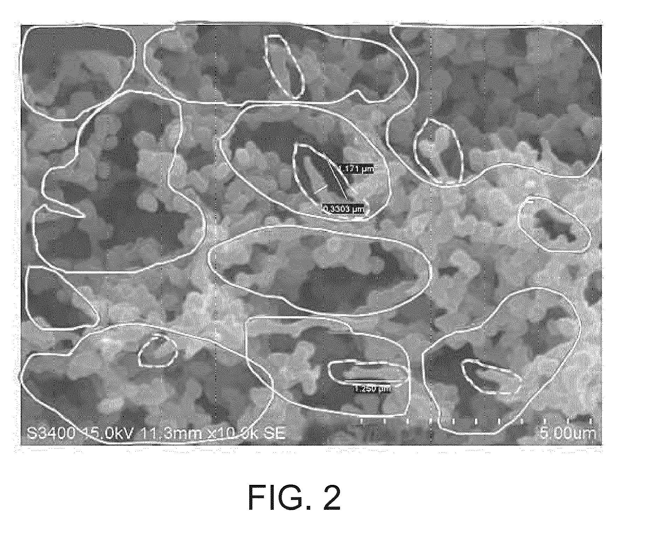

The tendrils cover in the range of from about 10% to about 70% of the surface area of the first surface. Typically, the tendrils cover at least about 25% of the surface area, preferably, at least about 35% of the surface area. The percentage of tendrils covering the surface area can be determined by, for example, using SEM micrographs at 10,000X magnification, determining the total number of porous structures with tendrils divided by the total porous structures on the surface area. Illustratively, as shown in Figure 2, there are 11 porous structures/pores (highlighted in solid lines) and 6 porous structures with tendrils (highlighted in broken lines), so the percentage of tendrils covering the surface area in this Figure is 54%.

The membranes can have any suitable pore structure, e.g., a pore size (for example, as evidenced by bubble point, or by K_{L} as described in, for example, U.S. Patent 4,340,479, or evidenced by capillary condensation flow porometry), a mean flow pore (MFP) size (e.g., when characterized using a porometer, for example, a Porvair Porometer (Porvair plc, Norfolk, UK), or a porometer available under the trademark POROLUX (Porometer.com; Belgium)), a pore rating, a pore diameter (e.g., when characterized using the modified OSU F2 test as described in, for example, U.S. Patent 4,925,572), or removal rating media. The pore structure used depends on the size of the particles to be utilized, the composition of the fluid to be treated, and the desired effluent level of the treated fluid.

Preferably, the membrane is an asymmetric membrane. An asymmetric membrane or bulk has a pore structure (typically, a mean pore size) varying throughout the membrane or portion of the membrane. Typically, the mean pore size decreases in size from one portion or surface to another portion or surface (e.g., the mean pore size decreases from the upstream portion or surface to the downstream portion or surface). However, other types of asymmetry are encompassed by embodiments of the invention, e.g., the pore size goes through a minimum pore size at a position within the thickness of the asymmetric section (e.g., a portion of an asymmetric section can have an "hourglass-type" pore structure). An asymmetric section can have any suitable pore size gradient or ratio, e.g., about 3 or more, or about 7 or more.

The porous surfaces of the skinless membranes can have any suitable mean pore sizes, e.g., as determined by, for example, calculating the average surface pore size from an SEM micrograph at 800X magnification.

Typically, the membrane surface created by removal of the skin layer (i.e., the microporous surface comprising nodes and tendrils) has a mean pore size of at least about 1 µm, preferably, at least about 3 µm. In some embodiments, the mean pore size is in the range of from about 5 µm to about 30 µm. Typically, the mean pore size at the newly created membrane surface increases as compared to that of the original skinned surface, for example, increases in the range of from about 3 to about 5 times that of the original mean pore size.

The non-modified microporous surface of the membrane has smaller mean pore size than the other surface (the microporous surface comprising nodes and tendrils). Typically, the non-modified microporous surface has a mean pore size in the range of from about 0.05 µm to about 1 µm. For those applications wherein sterile filtration is desired, the mean pore size of the non-modified microporous surface is in the range of from about 0.05 to about 0.2 µm.

The following examples further illustrate the invention but, of course, should not be construed as in any way limiting its scope.

### EXAMPLE 1

This example demonstrates the preparation of a skinless membrane in accordance with an embodiment of the invention.

A PES asymmetric membrane is prepared as generally described in U.S. Patent Application Publication Number 2013/0193075. The membrane has an open side (including the skin; having a pore size in the range of about 1 µm to about 6 µm, with a mean pore size of 2.92 ± 0.76 µm (N=40)) and a retentive side (having a bacterial retentive mean pore size of 0.2 µm).

Commercially available adhesive tape (3/4" wide) is applied in the machine direction (length) to the open surface of the membrane with slight manual pressure to ensure even application. The tape is removed in the machine direction, pulling at an acute angle of less than about 45 degrees at a speed of about 0.2 inch/second, the removed tape also pulling the skin layer from the membrane.

The created skinless surface has a pore size in the range of about 5 to about 25 µm, with a mean pore size of 12.91 ± 3.82 µm (N=60)). Tendrils cover about 45% of the surface area. The tendrils have lengths and widths in the ranges of about 1 to about 2 µm, and about 0.2 to about 0.4 µm, respectively.

Figure 1 is a SEM surface view of the top surface of the membrane, highlighting the tendrils.

Figure 2 is an SEM at 10,000X magnification, showing the surface of the membrane, also showing the total number of porous structures with tendrils and the total porous structures on the surface area, as used to calculate the percent surface area covered by tendrils. The percentage of tendrils covering the surface area in this SEM is determined by determining the total number of porous structures with tendrils divided by the total porous structures on the surface area. Illustratively, as shown in Figure 2, there are 11 porous structures/pores (highlighted in solid lines) and 6 porous structures with tendrils (highlighted in broken lines), so the percentage of tendrils covering the surface area in this Figure is 54%.

### EXAMPLE 2

This example demonstrates the structure of skinless membranes prepared in accordance with embodiments of the invention, compared to skinned membranes.

PES asymmetric membranes are obtained (SUPOR asymmetric PES C-200 membranes; Pall Corporation, Port Washington, NY). Skin layers are removed from these skinned membranes as described in Example 1. The original skinned membranes are provided as controls.

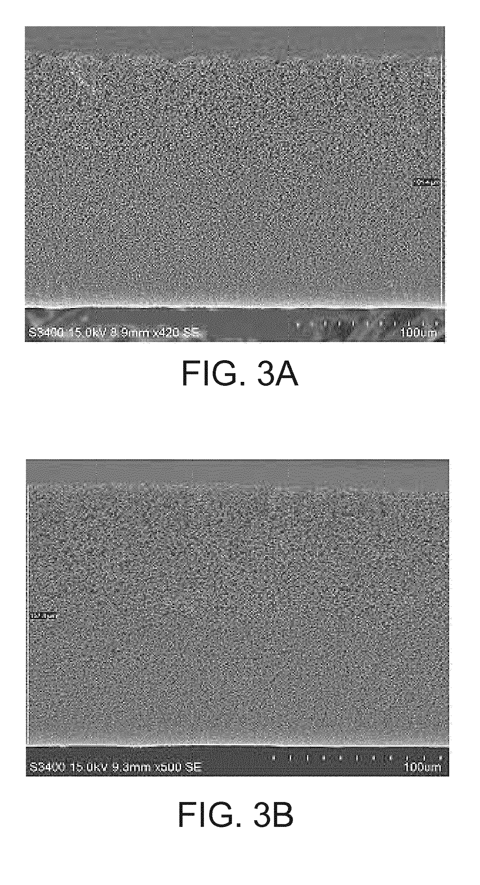

Figure 3A shows an SEM of the cross-section of the membrane after the skin is removed, and Figure 3B shows the cross-section of the membrane before skin removal.

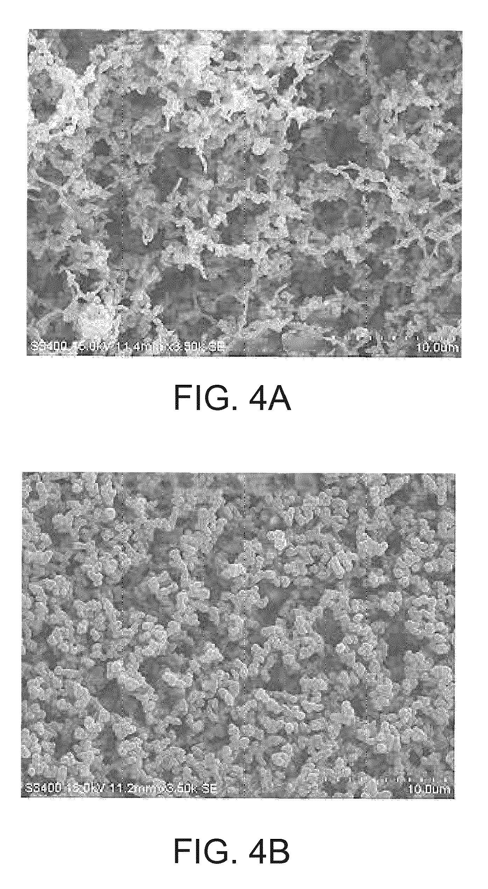

Figure 4A shows a SEM surface view of the membrane after the skin is removed (showing tendrils), and Figure 4B shows the cross-section of the membrane before skin removal.

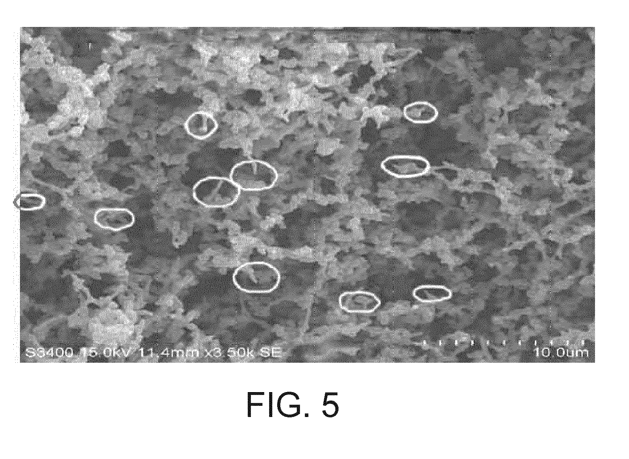

Figure 5 is an enlarged SEM surface view of the top surface of the skinless membrane (also shown in Figure 4A), highlighting the tendrils.

### EXAMPLE 3

This example demonstrates the increase in throughput using skinless membranes prepared in accordance with embodiments of the invention, compared to skinned membranes.

PES asymmetric membranes are obtained (SUPOR asymmetric PES C-200 membranes, and SUPOR asymmetric PES N-200 membranes; Pall Corporation, Port Washington, NY). Skin layers are removed from these skinned membranes to provide skinless membranes as described in Example 1. The original skinned membranes are provided as controls.

A 1% treacle solution is prepared (5 grams treacle (Lyle's black Treacle, Notts, UK); dissolved in 495 grams deionized water (DI)). The membranes are placed in test cells (on top of a 0.2 µm pore size rated isotropic hydrophilic membrane) the test system is purged, and the throughput is determined at 10 psi for 5 minutes.

The skinned membranes have throughputs of about 40 L/m², and the skinless membranes have throughputs of about 100 L/m², an increase of about 2.5 times that of the skinned membranes.

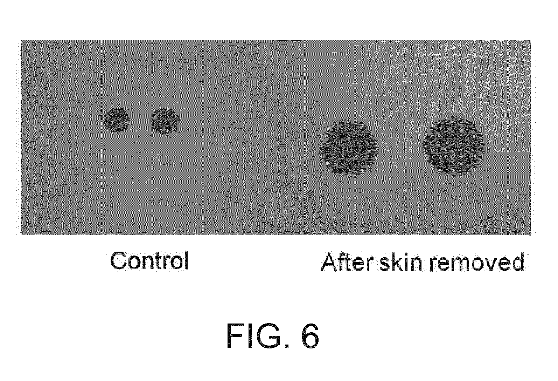

Additionally, skinned SUPOR asymmetric PES C-200 membranes are obtained, and skinless membranes are prepared from these membranes, and equal amounts of red food dye are applied to each membrane. As shown in Figure 6, after the same period of time, the skinless membrane shows faster liquid wicking.

### EXAMPLE 4

This example compares several properties of skinned membranes with skinless membranes prepared in accordance with embodiments of the invention.

PES asymmetric membranes are prepared as generally described in U.S. Patent Application Publication Number 2013/0193075.

The membranes are washed and dried. The membranes are tested, and the results are as follows:

| Membrane property | Control | Skin layer removed | Ratio (Skin layer removed/Control) |
|---|---|---|---|
| Thickness | 8.4 | 8.4 | 1.0 |
| K_{L} | 60.9 | 60.5 | 1.0 |
| Water flow rate | 45.4 | 46.2 | 1.0 |
| Normalized burst strength | 0.6 | 0.52 | 0.9 |
| Stretch | 24.6 | 24.7 | 1.0 |
| Burst strength | 4.9 | 4.3 | 0.9 |

After the skin layer is removed, the membrane K_{L} and the water flow rate are not significantly changed. The normalized burst strength is slightly decreased. The membrane thickness is essentially unchanged after removal of the skin layer, indicating that the skin layer thickness is very thin.

Two skin layer removed samples are challenged with *Brevundinonas diminuta* at a titer of 10⁷/cm². The results of the challenges are zero colony forming units (CFUs), and a log removal value (LRV) of greater than 9.4 log. Thus, removing the skin layer does not affect the membrane integrity.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and "at least one" and similar referents in the context of describing the invention (especially in the context of the following claims) are to be construed to cover both the singular and the plural, unless otherwise indicated herein or clearly contradicted by context. The use of the term "at least one" followed by a list of one or more items (for example, "at least one of A and B") is to be construed to mean one item selected from the listed items (A or B) or any combination of two or more of the listed items (A and B), unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A microporous asymmetric polyethersulfone membrane comprising:
(a) a first microporous skinless surface;
(b) a second microporous surface;
(c) a porous bulk between the first and second microporous surface;
wherein the first surface has a surface area and comprises nodes and tendrils, the tendrils having at least two ends, one end which is attached to a node, and another end which is unattached to the node, the tendrils covering in the range of from about 10% to about 70% of the surface area of the first surface.

2. The membrane of claim 1, wherein the tendrils have a length in the range of about 0.5 µm to about 2.5 µm.

3. The membrane of claim 1 or 2, wherein the tendrils cover in the range of from about 25% to about 60% of the surface area of the first surface.

4. The membrane of claim 1 or 2, wherein the tendrils cover in the range of from about 35% to about 60% of the surface area of the first surface.

5. The membrane of any one of claims 1-4, wherein the second microporous surface has a mean pore size in the range of from about 0.05 µm to about 0.2 µm.

6. A method of filtering a fluid, the method comprising passing the fluid through the membrane of any one of claims 1-5.

7. A method of making a skinless microporous asymmetric polyethersulfone membrane having tendrils on one surface of the membrane, the method comprising:
(a) obtaining a microporous polyether sulfone membrane having a skin;
(b) applying an adhesive surface to the skin, wherein the adhesive is attached to an article or a device;
(c) pulling the adhesive surface from the membrane, or pulling the membrane from the adhesive surface; and obtaining a skinless membrane having a newly created membrane surface having a surface area, the membrane surface having nodes and tendrils, the tendrils having at least two ends, one end which is attached to a node, and another end which is unattached to the node, the tendrils covering in the range of from about 10% to about 70% of the surface area of the newly created membrane surface.
